Europäisches Patentamt

European Patent Office

Office européen des brevets

(11) Veröffentlichungsnummer: **0 199 166**
A2

(12) ## EUROPÄISCHE PATENTANMELDUNG

(21) Anmeldenummer: 86104692.8

(22) Anmeldetag: 05.04.86

(51) Int. Cl.⁴: **B 60 N 1/12**

(30) Priorität: 19.04.85 DE 3514208

(43) Veröffentlichungstag der Anmeldung:
29.10.86 Patentblatt 86/44

(84) Benannte Vertragsstaaten:
AT BE CH DE FR GB IT LI LU NL SE

(71) Anmelder: Concord Kinderautositze- und Kindermöbel
sowie Geräteherstellungsgesellschaft mbH
Industriestrasse 19
D-8652 Stadtsteinach(DE)

(72) Erfinder: Kauffmann, Heinz-Joachim
Breslauer Strasse 50
D-8654 Marktleugast(DE)

(74) Vertreter: LOUIS, PÖHLAU, LOHRENTZ & SEGETH
Kesslerplatz 1 P.B. 3055
D-8500 Nürnberg(DE)

(54) **Verstellbarer Kindersicherheitssitz.**

(57) Es wird ein Kindersicherheitssitz (10) mit einem Grundteil (12) und einem Sitzteil (14) beschrieben. Das Sitzteil (14) ist in Bezug zum Grundteil (12) mittels bogenförmiger Teleskopeinrichtungen (16) zwischen einer Sitz- und einer Ruheposition verstellbar. Zur Arretierung des Sitzteiles (14) in der Sitz- bzw. in der Ruheposition ist eine Rasteinrichtung (18) vorgesehen.

FIG.1

## Verstellbarer Kindersicherheitssitz

Die Erfindung betrifft einen Kindersicherheitssitz mit einem Grundteil und einem Sitzteil, das in bezug zum Grundteil durch eine mit einer Rasteinrichtung versehene bogenförmige Schienenführungseinrichtung zwischen einer Sitz- und einer Ruheposition verstellbar ist, wobei die bogenförmige Schienenführungseinrichtung ein erstes bogenförmiges Schienenelement und ein das erste Schienenelement führendes zweites bogenförmiges Schienenelement aufweist.

Ein solcher Kindersicherheitssitz ist mit seinem Sitzteil mittels der bogenförmigen Schienenführungseinrichtung entlang eines Bogens nach Art einer Schwingbewegung verstellbar, bei welcher der Schwerpunkt des Kindersicherheitssitzes quasi unverändert bleibt. Das ist aus Gründen der bei solchen Kindersicherheitssitzen geforderten Sicherheit von großer Bedeutung. Eine Veränderung der Höhe des Schwerpunktes des Kindersicherheitssitzes würde nämlich eine Veränderung des Angriffpunktes der bspw. während eines Unfalles auftretenden sehr hohen mechanischen Verzögerungskräfte bedeuten. Bei einem Kindersicherheitssitz der eingangs genannten Art ist zwischen dem
Grundteil und dem Sitzteil in Längsrichtung des Kindersicherheitssitzes mittig eine bogenförmige Schienenführungseinrichtung vorgesehen. Die Ausbildung des
Kindersicherheitssitzes mit einer mittigen Teleskopeinrichtung weist jedoch den Mangel auf, daß
die Schienenführungseinrichtung den von der Seite
des Kindersicherheitssitzes auftretenden Kippkräften
nur bedingt standhält. Um diesen Seitenkräften standzuhalten, ist dort das am Grundteil angeordnete erste
bogenförmige Schienenelement im zweiten bogenförmigen
Schienenelement, das am Sitzteil befestigt ist, relativ
großflächig geführt. Zu diesem Zweck liegt das erste,
einen T-förmigen Querschnitt aufweisende Schienenelement mit seinem Querbalken großflächig am zweiten
bogenförmigen Schienenelement auf. Infolge dieser
großflächigen Auflage des ersten Schienenelementes
am zweiten Schienenelement ergeben sich jedoch große
Reibungskräfte, so daß die Verstellung des Sitzteils
im Bezug zum Grundteil nur mit großem Kraftaufwand
möglich ist.

Aus der DE-OS 27 27 785 ist ein verstellbarer Kindersicherheitssitz bekannt, bei dem das Sitzteil als
Schale ausgebildet ist, die auf einem starren Gestell
angeordnet ist. Zu diesem Zweck weist das starre Gestell eine kreisbogenförmige Doppelschiene auf, in
der die Sitzschale schwenkbar geführt ist. Die zu
beiden Seiten der Sitzschale parallel angeordneten
Schienen liegen vor und über den im Bereich der Armstützen an die Sitzschale angeformten Gleitnuten. Das
bedeutet jedoch, daß das starre Gestell mit seinen
beiden kreisbogenförmigen Doppelschienen bis zu den Armstützen hochgezogen sein muß, so daß das Gestell einen relativ großen Platzbedarf einnimmt. Ein weiterer Mangel besteht bei diesem Kindersicherheitssitz darin, daß die beiden kreisbogenförmigen Doppelschienen miteinander nicht unmittelbar mechanisch fest verbunden sind, sondern daß die Verbindung nur mittelbar über die Sitzschale erfolgt. Unter Berücksichtigung der möglichen, auf einen derartigen Kindersicherheitssitz einwirkenden Seitenkräfte ist ohne weiteres zu erkennen, daß ein solcher bekannter Kindersicherheitssitz nicht in der Lage ist, die an seine Seitenstabilität zu stellenden Anforderungen voll zu erfüllen.

Die DE-OS 26 50 182 zeigt einen Kindersicherheitssitz, bei dem das Sitzteil in bezug zum Grundteil durch eine Schienenführungseinrichtung verstellbar ist.. Die Schienenführungseinrichtung ist bei diesem Kindersicherheitssitz einfach geradlinig ausgebildet, so daß dieser bekannte Kindersicherheitssitz nicht zwischen einer Sitz- und einer Ruheposition verschwenkbar ist, die in unterschiedlichen Winkelstellungen vorgesehen sind.

Der vorliegenden Erfindung liegt die Aufgabe zugrunde, einen Kindersicherheitssitz der eingangs genannten Art zu schaffen, der eine hohe Stabilität aufweist und der leichtgängig zwischen einer Sitz- und einer Ruheposition verstellbar ist.

Diese Aufgabe wird erfindungsgemäß dadurch gelöst, daß das erste Schienenelement mindestens zwei Ausnehmungen mit einem zentralen Ansatz aufweist, und daß auf dem Ansatz ein Rollenelement gelagert ist, das zwischen dem ersten und dem zweiten Schienenelement einen definierten Abstand festlegt. Die beiden Ausnehmungen mit dem zentralen Ansatz sind einfach herstellbar, wobei der zentrale Ansatz zur genauen Positionierung des Rollenelementes dient. Da die Anordnung des Rollenelementes am zentralen Ansatz der Ausnehmung einfach möglich ist, sind die Montagekosten zur Herstellung der bogenförmigen Schienenführungseinrichtung minimal. Mit einer derartigen Schienenführungseinrichtung ist es einfach und kraftsparend möglich, das Sitzteil nach einer Betätigung der Rasteinrichtung relativ gegen das Grundteil zwischen mindestens einer Sitz- und mindestens einer Ruheposition zu verstellen.

Es hat sich als zweckmäßig erwiesen, daß das Rollenelement einen an den Querschnitt des Ansatzes angepaßten Innendurchmesser aufweist. Der zentraler Ansatz kann dabei einen rechteckigen oder vorzugsweise einen quadratischen Querschnitt aufweisen, dessen Ecken abgerundet sein können. Zur weiteren Vereinfachung der Montage des Rollenelementes auf dem zentralen Ansatz bzw. zur weiteren Verbesserung der Leichtgängigkeit der Drehbewegung des Rollenelementes in bezug zum ersten und/oder zum zweiten Schienenelement ist es auch möglich, daß der zentrale Ansatz kleinere Querabmessungen aufweist als der lichte Innendurchmesser des Rollenelementes. Auch bei der zuletzt genannten Ausführungsform wird das Rollenelement durch den zentralen Ansatz der Ausnehmung positioniert, so daß sich in jeder Stellung des Sitzteiles in bezug zum Grundteil gute Führungseigenschaften der bogenförmigen Schienenführungseinrichtung ergeben.

Das Rollenelement ist vorzugsweise als Kappe ausgebildet, die auf einer Seite mit einem Boden und auf der entgegengesetzten Seite mit einem Bund versehen ist. Der Bund dient zur Reduktion der Auflagefläche des Rollenelementes am zweiten bogenförmigen Schienenelement. Der Boden des Rollenelementes dient zur Führung der beiden bogenförmigen Schienenelemente in Richtung quer zu ihrer Längsrichtung. Ein besonderer Vorteil des erfindungsgemäß ausgebildeten Kindersicherheitssitzes besteht darin, daß die Geräuschentwicklung während der Verstellung des Sitzes minimal ist, weil die Rollenelemente an den Ansätzen genau geführt sind.

Bei einer bevorzugten Ausführungsform des erfindungsgemäßen Kindersicherheitssitzes weist das Rollenelement eine Innenhülse auf, deren lichter Innenquerschnitt an den Querschnitt des Ansatzes angepaßt ist. Diese Innenhülse kann aus einem abriebfesten Metall sein, die auf ihrer Außenseite mit Kunststoff derart beschichtet ist, daß sich eine Kappe mit einem Boden und einem Bund ergibt. Die Beschichtung der Innenhülse mit Kunststoff dient zur weiteren Reduktion der während einer Verstellung der Position des Sitzteiles in bezug zum Grundteil möglichen Geräuschentwicklung.

Beim erfindungsgemäßen Sicherheitssitz ist das erste Schienenelement vorzugsweise mit einem Längssteg und mit einem Quersteg T-förmig ausgebildet, weist das zweite Schienenelement einen den Quersteg umgreifenden Querschnitt mit einem Längsschlitz auf, aus dem der Längssteg vorsteht, und ragt das Rollenelement mit seinem Bund in den Längsschlitz hinein. Auf diese Weise dient nicht nur der Boden des kappenförmigen Rollenelementes zur Führung in Querrichtung der Teleskopeinrichtung, sondern auch der in den Längsschlitz hineinragende Bund des Rollenelementes. Des weiteren liegt infolge dieser Ausbildung der Bund des kappenförmigen Rollenelementes nur entlang einer vergleichsweise kleinen Berührungsfläche am zweiten Schienenelement an, so daß die beiden Schienenelemente der
Schienenführungseinrichtung leichtgängig gegeneinander verstellt werden können.

Als besonders zweckmäßig hat es sich erwiesen, daß
beim erfindungsgemäßen Kindersicherheitssitz zwei
bogenförmige Schienenführungseinrichtungen nebeneinander parallel angeordnet sind, die durch Verbindungsteile miteinander verbunden sind. Ein derartig ausgebildeter Kindersicherheitssitz ist nicht nur in seiner
Längsrichtung einfach zwischen der Sitzposition und
der Ruheposition verschwenkbar, sondern gleichzeitig
auch gegen Krafteinwirkungen von der Seite, wie sie
bspw. bei seitlichen Kollisionen auftreten können,
stabil.

Das erste Schienenelement einer der beiden Schienenführungseinrichtungen des erfindungsgemäßen Kindersicherheitssitzes kann mit einer Ausnehmung für die Sitzposition und mit einer Ausnehmung für die Liegeposition
versehen sein, und das zweite Schienenelement dieser
einen Schienenführungseinrichtung kann die federnde
Rasteinrichtung zum Einrasten in eine der beiden Ausnehmungen aufweisen. Die federnde Rasteinrichtung
weist dabei eine derartige Vorspannung auf, daß sie in
der richtigen Position des Sitzteiles von selbst in
die der Sitz- bzw. Ruheposition entsprechende Ausnehmung einrastet. Die federnde Vorspannung wird dabei
derart gewählt, daß es einem den erfindungsgemäßen
Kindersicherheitssitz benutzenden Kind selbst nicht
möglich ist, die Rasteinrichtung zu betätigen.

Ein Ausführungsbeispiel eines erfindungsgemäßen Kindersicherheitssitzes wird nachfolgend anhand der Zeichnung
beschrieben. Es zeigen:

Fig. 1 eine räumliche Darstellung eines Kindersicherheitssitzes,

Fig. 2 zwei bogenförmige Schienenführungseinrichtungen
des Kindersicherheitssitzes gem. Fig. 1 in
Draufsicht,

Fig. 3 eine Seitenansicht der Schienenführungseinrichtungen gem. Fig. 2,

Fig. 4 einen Schnitt entlang der Schnittlinie IV-IV
aus Fig. 2,

Fig. 5 einen Schnitt entlang der Schnittlinie V-V
aus Fig. 4, und

Fig. 6 einen Schnitt entlang der Schnittlinie VI-VI
aus Fig. 5.

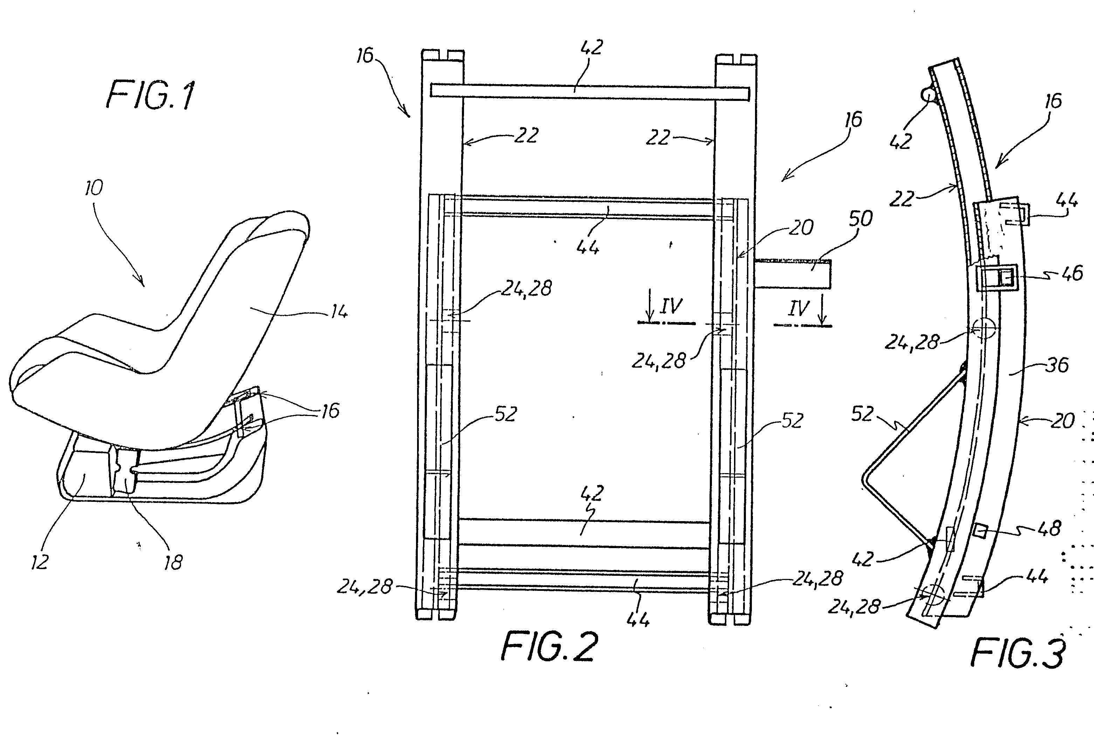

Fig. 1 zeigt einen Kindersicherheitssitz 10 mit einem
Grundteil 12 und einem Sitzteil 14. Das Sitzteil 14
ist in bezug zum Grundteil 12 durch bogenförmige
Schienenführungseinrichtungen 16 zwischen einer Sitzposition und einer Ruheposition verstellbar. Zur Verstellung und insbesondere zur Arretierung des Sitzteils 14 in der Sitz- bzw. in der Ruheposition ist
eine Rasteinrichtung 18 vorgesehen.

Die bogenförmigen Schienenführungseinrichtungen 16 des
Sitzes 10 werden an Hand der Figuren 2 und 3 näher erläutert. Jede bogenförmige Schienenführungseinrichtung
16 weist ein am Grundteil 14 des Sitzes 10 angeordnetes
erstes bogenförmiges Schienenelement 20 auf. Das erste
Schienenelement 20 ist in einem zweiten bogenförmigen
Schienenelement 22 geführt. Das zweite bogenförmige
Schienenelement 22 ist am Sitzteil 14 befestigt.

Das erste Schienenelement 20 weist mindestens zwei Ausnehmungen 24 auf, wobei die Ausnehmungen 24 der seitlich nebeneinander parallel angeordneten Schienenelemente 20 einander zugewandt sind, um Querbewegungen der Teleskopeinrichtungen 16 zu verhindern.

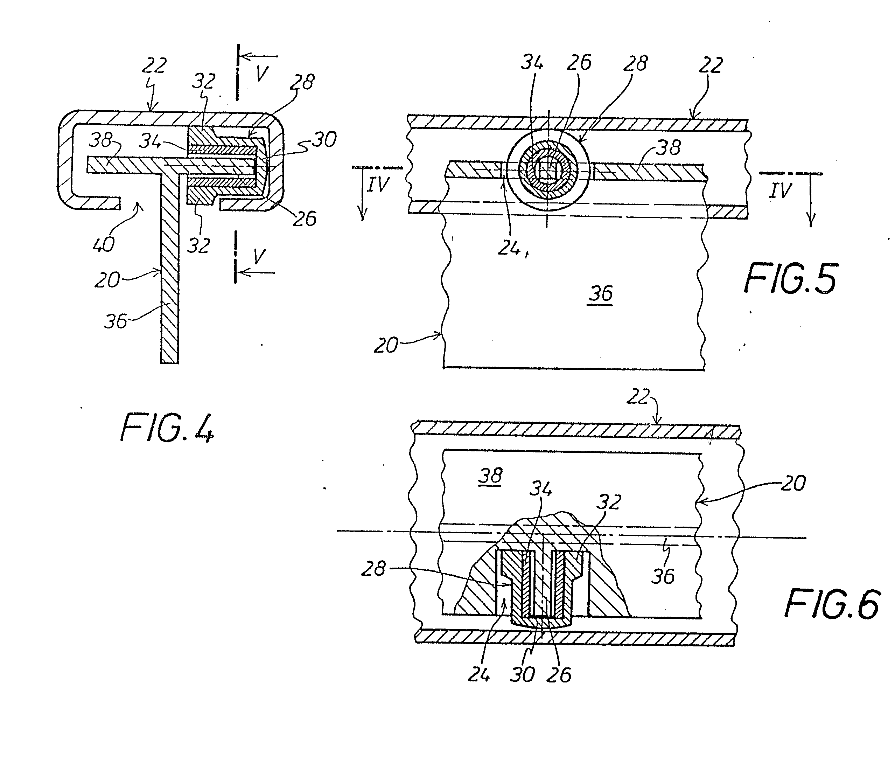

Wie aus den Figuren 4 bis 6 deutlich ersichtlich ist, weist jede Ausnehmung 24 einen zentralen Ansatz 26 auf, in dem ein Rollenelement 28 gelagert ist. Das Rollenelement 28 legt zwischen dem ersten Schienenelement 20 und dem zweiten Schienenelement 22 einen definierten Abstand fest. Das Rollenelement 28 ist mit einem an den Querschnitt des Ansatzes 26 angepaßten Innendurchmesser ausgebildet. Es weist einen Außendurchmesser auf, der den Abstand zwischen den beiden Schienenelementen 20 und 22 festlegt. Das Rollenelement 28 ist als Kappe ausgebildet, die auf einer Seite mit einem Boden 30 und auf der entgegengesetzten Seite mit einem Bund 32 versehen ist.

Bei einer bevorzugten Ausführungsform des Kindersicherheitssitzes weist das Rollenelement 28 eine Innenhülse 34 auf, die aus einem abriebfesten Metall bestehen kann. Desgleichen bestehen das erste Schienenelement 20 und das zweite Schienenelement 22 aus Metall.

Wie aus Fig. 4 ersichtlich ist, ist das erste Schienenelement 20 T-förmig mit einem Längssteg 36 und einem dazu senkrechten Quersteg 38 ausgebildet. Das zweite Schienenelement 22 weist einen den Quersteg 38 umgreifenden Querschnitt mit einem Längsschlitz 40 auf. Aus dem Längsschlitz 40 steht der Längssteg 36 des T-förmigen Schienenelementes 20 vor. Das Rollenelement 28 ragt mit seinem Bund 32 in diesen Längsschlitz hinein. Der seitliche Abstand zwischen den beiden Schienenelementen 20 und 22 der Schienenführungseinrichtung 16 wird primär durch den Boden 30 der Rollenelemente 28 festgelegt. Der in den Längsschlitz 40 hineinragende Bund 32 des Rollenelementes 28 kann zur seitlichen Führung einen bestimmten Beitrag leisten.

Wie aus den Figuren 1 bis 3 ersichtlich ist, sind zwei bogenförmige Schienenführungseinrichtungen 16 nebeneinander parallel angeordnet, die durch Verbindungsteile 42 und 44 miteinander fest verbunden sind. Dabei verbinden die Verbindungsteile 42 die zweiten Schienenelemente 22 miteinander, während die Verbindungsteile 44 die ersten Schienenelemente 20 miteinander verbinden. Wie aus Fig. 3 ersichtlich ist, ist das erste Schienenelement 20 einer der beiden Schienenführungseinrichtungen 16 mit einer Ausnehmung 46 für die Sitzposition und mit einer Ausnehmung 48 für die Liegeposition des Kindersicherheitssitzes versehen. Das zweite Schienenelement 22 dieser einen Schienenführungseinrichtung 16 ist mit der federnden Rasteinrichtung 18 zum Einrasten in eine der beiden Ausnehmungen 46 oder 48 versehen. In den Figuren 2 und 3 ist von dieser federnden Rasteinrichtung 18 nur eine am zweiten Schienenelement 22 befestigte Führungshülse 50 dargestellt. Mit der Bezugsziffer 52 sind Befestigungsbügel bezeichnet, mit welchen die Schienenführungseinrichtungen 16 bzw. deren zweite Schienenelemente 22 am Sitzteil 14 des Kindersicherheitssitzes 10 befestigt sind. An den Verbindungsteilen 44 wird das Grundteil 12 des Kindersicherheitssitzes befestigt.

- I -

Patentansprüche -:
--------------------

1. Kindersicherheitssitz (10) mit einem Grundteil (12)
   und einem Sitzteil (14), das in bezug zum Grundteil (12) durch eine mit einer Rasteinrichtung
   (18) versehene bogenförmige Schienenführungseinrichtung (16) zwischen einer Sitz- und einer
   Ruheposition verstellbar ist, wobei die bogenförmige Schienenführungseinrichtung (16) ein
   erstes bogenförmiges Schienenelement (20) und
   ein das erste Schienenelement (20) führendes
   zweites bogenförmiges Schienenelement (22) aufweist,
   d a d u r c h   g e k e n n z e i c h n e t ,
   daß das erste Schienenelement (20) mindestens zwei
   Ausnehmungen (24) mit einem zentralen Ansatz (26)
   aufweist, und daß auf dem Ansatz (26) ein Rollenelement (28) gelagert ist, das zwischen dem ersten
   Schienenelement (20) und dem zweiten Schienenelement (22) einen definierten Abstand festlegt.

2. Kindersicherheitssitz nach Anspruch 1,
   d a d u r c h   g e k e n n z e i c h n e t ,
   daß das Rollenelement (28) einen an den Querschnitt des Ansatzes (26) angepaßten Innendurchmesser aufweist.

3. Kindersicherheitssitz nach Anspruch 1 oder 2,
   d a d u r c h   g e k e n n z e i c h n e t ,
   daß das Rollenelement (28) als Kappe ausgebildet
   ist, die auf einer Seite mit einem Boden (30)
   und auf der entgegengesetzten Seite mit einem
   Bund (32) versehen ist.

4. Kindersicherheitssitz nach einem der Ansprüche 1 bis 3,
   d a d u r c h   g e k e n n z e i c h n e t ,
   daß das Rollenelement (28) eine Innenhülse (34)
   aufweist, deren lichter Innenquerschnitt an den
   Querschnitt des Ansatzes (26) angepaßt ist.

5. Kindersicherheitssitz nach einem der Ansprüche 1 bis 4,
   d a d u r c h   g e k e n n z e i c h n e t ,
   daß das erste Schienenelement (20) mit einem Längssteg (36) und einem Quersteg (38) T-förmig ausgebildet ist, daß das zweite Schienenelement (22)
   einen den Quersteg (38) umgreifenden Querschnitt
   mit einem Längsschlitz (40) aufweist, aus dem der
   Längssteg (36) vorsteht, und daß das Rollenelement
   (28) mit seinem Bund (32) in den Längsschlitz (40)
   hineinragt.

6. Kindersicherheitssitz nach einem der vorhergehenden
   Ansprüche,
   d a d u r c h   g e k e n n z e i c h n e t ,
   daß zwei bogenförmige Schienenführungseinrichtungen (16) nebeneinander parallel angeordnet sind,
   die durch Verbindungsteile (42, 44) miteinander
   verbunden sind.

7. Kindersicherheitssitz nach einem der vorhergehenden Ansprüche,

d a d u r c h   g e k e n n z e i c h n e t ,

daß das erste Schienenelement (20) einer der beiden Schienenführungseinrichtungen (16) mit einer Ausnehmung (46) für die Sitzposition und mit einer Ausnehmung (48) für die Liegeposition versehen ist, und daß das zweite Schienenelement (22) dieser Schienenführungseinrichtung (16) die federnde Rasteinrichtung (18) zum Einrasten in eine der beiden Ausnehmungen (46, 48) aufweist.

FIG.1

10

14

16

12    18

FIG.2

16

42

22          22

44

20    50

24,28

IV    IV

24,28

52          52

42

44

24,28          24,28

FIG.3

16

42          16

22          44

20

46

24,28

36

52

20

42          48

24,28          44

1/2

0199166

FIG.4

FIG.5

FIG.6